# EUROPEAN PATENT APPLICATION

(11) **EP 2 136 541 A1**
(43) Date of publication of application: **23.12.2009**
(21) Application number: 07747189.4
(22) Date of filing: 23.03.2007
(51) Int. Cl.: H04M 1/725, H04M 19/04, H04M 1/02

(54) **MULTIPLE-ALARM ELECTRONIC DEVICE THAT DELIVERS SILENT WARNINGS TO THE USER ON RECEIVING RADIOFREQUENCY SIGNALS COMING FROM ONE OR SEVERAL REMOTE TRANSMITTERS AND METHOD FOR USE THEREOF**

(71) Applicant: Pulido López, Felipe Eugenio, Altamirano 212-H Col. Cuauhtémoc, Toluca Edo. de México, C.P. 50130 (MX); Pulido Solis, Felipe, Altamirano 212-H Col. Cuauhtémoc, Toluca Edo. de México, C.P. 50130 (MX)
(72) Inventor: Pulido López, Felipe Eugenio, Altamirano 212-H Col. Cuauhtémoc, Toluca Edo. de México, C.P. 50130 (MX); Pulido Solis, Felipe, Altamirano 212-H Col. Cuauhtémoc, Toluca Edo. de México, C.P. 50130 (MX)
(74) Representative: Müller-Wolff, Thomas
(86) International application number: PCT/MX2007/000043
(87) International publication number: WO 2008/118002

(57) **Abstract**

Multiple alert electronic device, which delivers silent advices or warnings to the user by receiving radio frequency signals, coming from one or several remote transmitters and its method of application. When the device receives signals coming from the linked transmitters, this signals are transmitted to the user as silent warnings, in a simultaneous way allowing its identification and source of such warnings. The device is designed to receive radio frequency signals coming from equipment, apparatus fixed or mobile such as a industrial machine, a cell phone, an electronic agenda, RF block, computer terminal, software, Audio Gateway (AG), alarm clocks, any warning system or any other object or device from which a radio frequency signal could be received in a short distance. The device could be encapsulated, ensemble, integrated or built in a watch band, a ring, a pendant, a bracelet, a necklace, a cap, glasses frame, a visor, gloves or any other garment or any accessory that allows the device to be in contact with user's body, additionally it's use and application method is described.

## Description

### INVENTION FIELD

The present invention is in relation to the wireless communication fields, the electronics field, the
silent alarms field, the transformation industry, the home automated communication field , the
conventional telephony field, the cellular telephone system and mobile communication field, the hospital industry, the automotive industry, and the computer industry, this invention refers in particular to devices which alerts its users through the emission of a silent signal and to a method which describes how this warnings are operated in order to be received by a person, once are detected by the device, the user is able to receive and identify the signals coming from several signal emitters at the same time through radio frequency signals emitted by them when they are close by.

Now days there are several technologies in the wireless communication, there exits short distance wireless communications systems through the emission in the infrared waveband, WiFi, Bluetooth, Wibree technology among others.

The availability of the current wireless communication technology has made possible the communication between linked devices, throughout different protocols, which makes possible the development of the afore mentioned invention which enables the user to get multiple silent signals sent either isolated or simultaneously by several transmitters enabling the user to received such signals or alert messages in places where audio signals are not permitted such as executive meetings or religious ceremonies or in noisy environments such as social gathering and industrial facilities, this invention also offers solution to the earring impaired enabling them to feel the signals.

### OBJECT OF THE INVENTION

The present invention provides a low-cost, simple, efficient, versatile, and small device which function is to alert it's user through electroshocks about radio frequencies signals received from devices or transmitters linked to the device within a short distance radius all this is achieved using only one device which is able to get several signals in a simultaneous or isolated way, notifying the user the source of such signals.

The technological change consist in the innovation of the device and its technological components which will be further mentioned, it is also integrated by a firmware installed in the processor which allows the user to receive silent alerts through low intensity electro shock that are harmless to the user. The radio frequencies signals received by the device could be emitted by any transmitter to which the device is linked being the transmitter any industrial machine, computer, home appliance, cell phone or conventional phone, medical equipment or any device that complies with the technology of the invention such as Wibree technology.

The object of the present invention has and additional reach, which consist in describing the mechanism to establish connectivity and communication among the objects or devices that are wished to be linked.

The device could be enclosed in an isolated form, could be a self-adhesive plate or could be integrated in any object that allows keeping it in contact with the body.

The device and the method of the present invention have as object to provide practical ways that allow the user the perception of multiple signals, coming from linked mobile and fixed devices through the communication of radio frequency signals allowing the user to identify the warning signals and its transmitter, by small electroshocks that can be received in places where silence must be kept and noisy environments.

### BACKGROUND

### Current stage of technology

There exist now days a great deal of equipment and devices that have wireless communication among them, besides there are vibration alert systems in an important number of objects. This technology could be found in devices ranging from remote controls for T.V., to the Bluetooth watch and the hands-free and Bluetooth technology.

The wireless communication technology and the vibratory alert system are concepts that have an important relationship with the present invention.
There are different communication technologies such as, Bluetooth technology, WiFi, and the infrared transition technology, the new emerged Wibree, each one of these technologies have their own specific communication protocols and there are used according to their particular needs and reach. The standard Bluetooth has now days a great penetration in the markets, being the reason it's been widely used in the wireless communication, the Wibree technology is new, which offers important advantages such as compatibility with Bluetooth, it's low energy consumption, it's application to small devices among others.

In regards to alarms and vibratory systems, there are vibrators of different kinds, in general they are used in cell phones and these could be offset mass motor or one-pieced electric device among others.
Alternately to the vibrations systems that nowadays are used as silent warnings there are technologies which integrate devices able to emit small electroshocks similar to the ones used in electro puncture.
In relation to the wired and wireless alert systems the stage of technology has many devices and systems, from which we could mention some, such as conventional car alarms that emit sounds, turn on lights, deactivate the car's operation; in the industry we can find sirens and warnings through flashing lights of high intensity, that activate themselves in case of an emergency, financial institutions as banks have alarm systems which emit sound or warning signs to security centers, some home appliances emit sounds when their user needs to be alerted; medical equipment emit alarm sounds when they encounter difficult situations with a patient like the electro cardiographer; computers also emit sound to advice about a new e-mail o they detect the presence of a new user in the chat room; Telephone announce the incoming calls through different sounds and vibratory alarms, watches and clocks emit several sounds of alarm. But in general all these notices, alarms or warnings are transmitted to the environment or surroundings except the vibratory alarm of the cell phone, which somehow is transmitted to the body of the user. Anyways, nowadays in the market there is no device that allows the user to receive alert calls or warnings on an individual or private basis, but overall on a silent way, effectively and simultaneously when the signal comes from various devices or transmitters.

In the patent US 2004/0185915 A1, it's disclosed the functioning of a hands-free Bluetooth system under the title of " Wireless Hands-Free System with Silent User Signaling" and it refers to a wireless phone system and hands free with a silent warning to the user. The device is an speaker and a microphone presented in an ear piece and it works as a wireless extension to the cell phone, allowing the user to be hands free while making a phone call, the voice and data communication between the telephone and the device is done through Bluetooh technology and the device has a vibratory alert system similar to the one found in cell phones and a great deal of current devices.

In the patent US006118979A, It's disclosed a wireless caller Identifier, that is to be worn in the wrist, such device composed by a liquid crystal screen which displays the telephone number where the call is being received from, the communication technology used by this device is not noted. There are several devices that allow remote warning for mobile devices, some are light warnings, some use sounds, some have a vibratory system. The Spanish patent published with number ES 1 062 113 U, discloses a remote signal device for mobile terminals which is used to transmit a warning alarm through the emission of light and/or sound that applies exclusively to mobile terminals and also recurs to the use of Bluetooth technology. This device has application in the noisy environments and it is designed specifically to receive cell phone and mobile phone's signals, defining the stage of technology in wireless signing being this the preceding point of the present invention.

Other existing technological resource in this subject is the wireless communication through infrared links, that are used in several applications among those are computers, computer peripheral devices, other technological application is the communication field between music devices standing out the ones that use MP3 format. As a sample of this application is the music file transferring between iPods in a wireless form. Other previous applications of wireless communication are: the communication between the base of a conventional telephone to its remote wireless extension, remote controls for television, key chains that allow the management of car doors by a remote control, and remote control for electric doors. In the market there is a wide variety of products which use the wireless technology, however there isn't any simple, light, convenient, practical and low cost devise which serves exclusively to alert the user silently through harmless electroshocks, signals emitted by devices or machines that could be linked, this could be a mobile or fixed machine, being able to be as simple as a door bell at a home or an alarm emitted by a washing machine in an isolated or combined event.

The main feature of this device is its capacity to receive signals simultaneously , radio frequency signals emitted by several devices, being these either fixed or mobile, these warning are emitted through electroshocks, allowing to have a wide range of use.

The present invention has its application and use in multiple fields; in the industrial field has the characteristic of solving the problems that are presented at noisy environments, such as production floors, where is necessary that the operators receive alarm signals in case of danger and where sound signals are hard to be heard.

In the cell phone industry this invention will apply to solve the problematic that now exist by not having an external device which warns the user of an incoming call in a silent form and that the same device could be linked to a computer, a machine, an appliance, the door bell, or any other device which transmit radio frequencies. Although many cell phones have an integrated vibratory alert system, many times this is not effective due to the fact that it is not placed in contact to the user's body, or user's clothes will not allow the user to feel the vibration; particularly with female users whom find it hard to keep comfortably any device attached to their body, it is also hard to distinguish these alerts when the user is situated in a noisy environment such as social gatherings or a concert or in times when the user has to be in a place where silence is essential like religious acts or executive meetings, with all this being said the object of this invention is to allow the user to receive in only one device, advices from cell phones, or any mobile device as well as from any other machine at the same time.

As an example a house wife could receive the signal of an incoming phone call, the warning from a drying machine or a door bell ring, although she is a noisy environment or away from where any of these machines might be. A machine operator at factory could receive signals being sent to his cell phone, he could receive the warning signal emitted by one o several machines; the executive or the student could receive trough this device signals sent to their cell phones and the messages originated in their computers, alerting of the presence of a new e-mail.

The previously mentioned devices define the current stage of technology which is precedent to the present invention.

The Patent ES 1 062 113 U, which has been referred, discloses a solution to a remote alarm for mobile terminals, which is designed to be used in noisy environments, different to the present invention the before mentioned device is linked to a mobile device (particularly to a cell phone), this device can't be used in a noisy environment and also does not offer the possibility of receiving signals coming from several devices, therefore it can't receive signals simultaneously and it's not design to have any connectivity to fixed machines, for all these reasons, the referred device has limited applications in home used devices, industrial machines and computer equipment or appliances field for which this present invention has been designed.

Some specific examples where the present invention can be applied are as follow: In the computer field are some limitations as such, when a computer equipment receives an e-mail or some user is trying to enter a chat session the computer emits a sound to alert the users. In case the user is a place where many people work o the user is watching T.V., these warnings are confusing, uncomfortable and annoying or could not be able to be heard. In the restaurant industry it will be of great use because a warning can be sent from the guest's table to the server immediately; this can also be used to a great extent in night clubs where getting the server's attention is almost impossible because of the noise and lack of illumination. It is worth mentioning that nowadays, there is an important limitation related to warnings and alarms for the earring impaired that can be solved with the use of the present invention; this is due to the fact that there is not a low-cost device in the market that allows the user to receive effectively silent warnings transmitted by devices and several kinds of machines. A person with this impairment could link the device, for example to a smoke detector, an alarm clock, several home appliances, a doorbell, among others. In hospitals and medical environments, the device would be of usage allowing linking between doctors or nurses and medical equipment connected to patients, so warning signals can be monitored.

The present invention will complement the group of afore mentioned applications, because it is a light, practical and low-cost device that allows the user to receive silent and wireless signals transmitted by an industrial machine, one or several cell phones, an electronic agenda o even a computer, isolated or simultaneously.

### DESCRIPTION OF THE INVENTION

### FIGURES BRIEF DESCRIPTION

FIG. 1 Generic block diagram of the components and accessories that make up the device.
FIG. 2 Block diagram of functional elementary architecture of the device.
FIG. 3 Diagram describing the operation method of the device, when all the components, elementary and accessories, are incorporated.
FIG. 4 Diagram describing the operation method of the device, when only the elementary functional components are incorporated.
FIG. 5 Apparatus, objects and devices from which a radiofrequency signal received by the invention might proceed.
FIG. 6 Models in which the device can be encapsulated, mounted, or built-in.
FIG. 7 Diagram of communication between the transmitters, the device of this invention and the various warnings generated to the user.
FIG. 8 Block Diagram of the device showing how is the reception of radio frequency signals and how these get to the user.
FIG. 9 Block Diagram of the transmitter equipment and its components linked to the device.
Fig. 10 Diagram that represents the method which establish the connectivity between devices and their functioning.

### DETALIED DESCRIPTION OF THE INVENTION

The device object of this invention is describe as follows as well as its different types of application in several fields and its working methodology. The types, presentation form and methodology which are described are listed in how the device can be developed but not limited depending on the approach of each application, there could be several products derived from the same principal and functionality.
It is important to make a note of the innovating elements that make up the functionality of the device which are listed here: its particular way of warning the user through the transmission of low intensity electroshocks, Wibree technology which is an innovated technology in the wireless communication field; the distinctive characteristic of receiving multiple signals coming from remote objects, the connectivity with fixed and mobile objects and devices and the integration of its own firmware all these as a whole provide functionality to the device. There are also additional elements which are accessories that allow versatility to the different applications. Although any component or technology here described could be replaced by another one that performs the function taking care of aspects of morphology, usage, market, cost, functionality and structure derived from the particular conditions of the application, manufacturing and compatibility with other devices as long as it complies with the functionality of the device reason or motive to this invention.

### TECHNICAL CHARACTERISTICS

The multiple alert electronic device which provides a silent alert to its user when receiving radio frequency signals emitted by one o more remote transmitter is a device of such dimensions that can easily and comfortably be carried by the user is made up by hardware, a radio frequency module, electronic components and firmware installed in the device. Due to the wide variety of applications, some components could be omitted in the implementation of some types of it as long as the final product complies with the function of allowing its user to receive wireless and silently radio frequency signals emitted by any transmitter linked to the device either isolated or simultaneously.

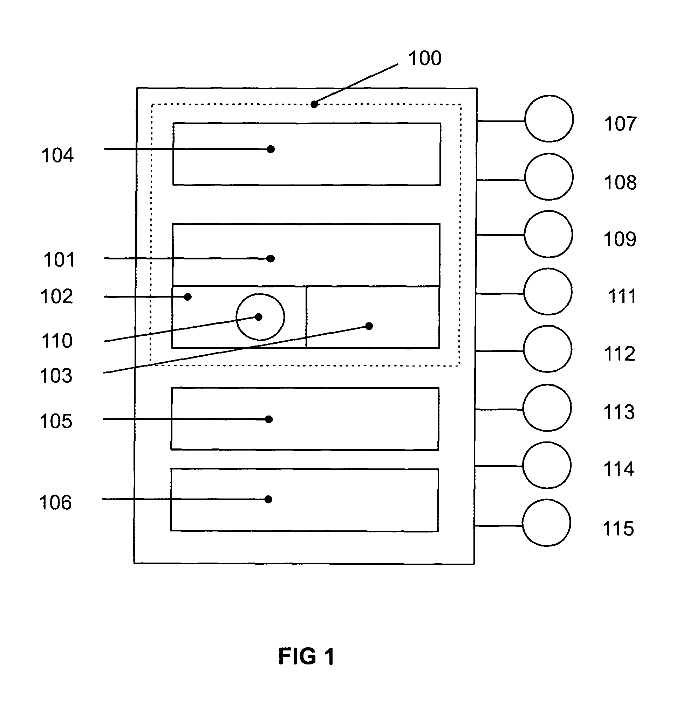

In FiG. 1 The components that make up the device are shown, and are described as follow pointing out their functional characteristics; The Central Processing Unit (CPU) 101, which is formed by a microprocessor which function is the data processing and operation control of the device, a Read Only Memory (ROM) 102, place where the firmware is stored which is in charge of controlling the device's operation, a Random Access Memory (RAM) 103, In charge of the temporary information that is received and sent during the communication process with the remote devices of transmission-reception through which the tracing, communications and identification between devices is made, in order to establish the sending and reception of radio frequency signals. A controller 104, which operates as the interface between the CPU and the electric components from the external device to the base band logic 100 (device which emits the electroshocks, switch, LEDs, display, ground and power feed). A transducer 105 which operates as the connectivity interface to analog-digital and digital-analog conversions in the communication with the radio frequency module 106, which works as transmitter and receiver of the radio frequencies signals. An antenna 107. Through which the radio frequencies are sent and received. Outside the baseband logic the electric components are located, which work with a voltage of 3 to 4 V. and are part of a device emitter of electroshocks 108, which sends low intensity electroshocks when the device receives radio frequency signals from the devices or equipment linked or configurated to the device. The electroshocks could have different intensity or even be transmitted in short intervals, variable frequency and duration, with the intentions of letting the user identify based on these differences the source of the radio frequency signals received. If the application would call for it this signal mechanism could be substituted by any other device which sends contact silent or electrical signals to the user, e.g a vibrator. A switch 109, through which the operator would have a way to reset, turn and turn off the device. The device will have a firmware 110. Installed in the ROM which will allow the CPU to execute the logical routines allowing the device to achieve the localization and identification of radio frequency signal transmitters , and reaching communication with these devices allowing the registration of addresses of each transmitter that is linked, in order to establish individual communication in each particular case. The firmware will also allow the device to identify the address of each transmitter at the time of receiving simultaneous signals and will transmit the electroshock to the user as corresponded, generating also a symbol or number which will be displayed 113, when present. The device could have a LED V (green) 111, which will be indicator of the incoming of a radio frequency signal to the device and one LED R (red) 112, which will indicate that a signal was received and was not taken care of. The LED colors could be chosen according to the user's needs or could be substituted by a bipolar LED, which will have the same function. The required power source 114, should have a voltage between 3 and 4 V, however, if changing this specification became necessary, because of the components requirement, this will affect the whole concept, which is simply to provide the system with the energy necessary for the operation of the device. Said source could be a disposable battery, a rechargeable battery, a photoelectric cell or any other device that provides energy needed for the device's operation. The circuit requires a ground 115. Depending on each type, any element already described could be integrated as a whole or partially.

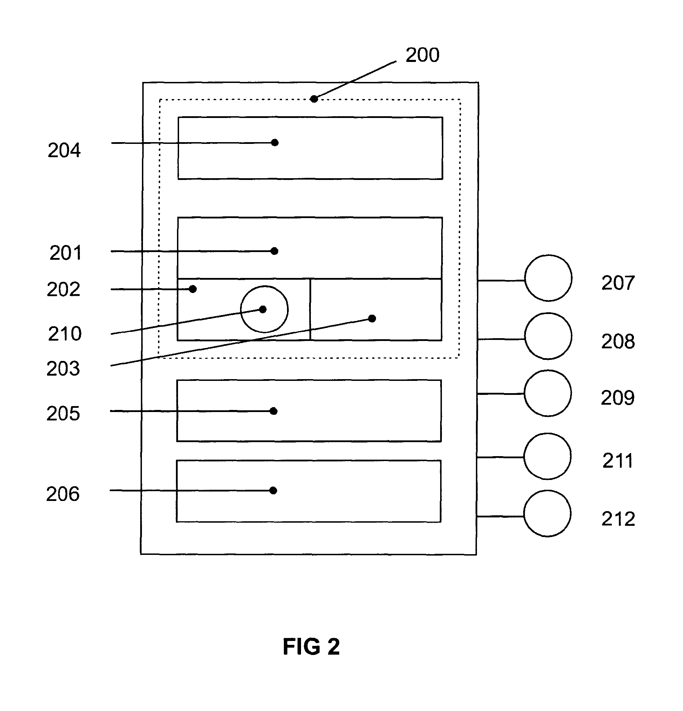

In FIG. 2 the components that make up the elementary functional architecture of the device are shown: the central processing unit (CPU) 201, comprised of a microprocessor, which function are data processing and control of the device's operation. A permanent memory, Read Only Memory (ROM) 202 where the firmware in charge of the control and operation of the device is stored. A temporary memory, Random Access Memory (RAM) 203, in charge of temporary storage of information that is received and sent during the communication process among the transmit-reception remote devices, and through which localization, identification and communication routines among devices take place, to establish the radiofrequency signal send and receive. A controller 204, which operates as an interface between the CPU and the electronic components of the device that are external to baseband logic 200. A transductor 205, which operates as a connectivity interface for analogical-digital and digital-analogical conversions in the communications with the radiofrequency module 206, which works as a transmitter and receptor of radiofrequency signals. An antenna 207, through which radiofrequency signals are received and transmitted. The electronic components, which work at a 3 to 4 V. voltage, are located outside the baseband logic and correspond to a device that emits electroshocks 208, which sends low intensity electroshocks when the device receives radiofrequency signals from devices or equipment linked to the device. The electroshocks could be of different intensity or even be emitted at short intervals with variable frequency and length, enabling the user to identify, based on these differences, the source of the radiofrequency signals received. If the application calls for it, the signaling mechanism could be substituted by any other device that sends silent, contact signals, or electrical signals to the user, e.g a vibrator. A switch 209, through which the operator could reset, turn on/ off the device. The device will have a firmware 210. Installed in the ROM which will allow the CPU to execute the logical routines allowing the device to achieve the localization and identification of radio frequency signal transmitters , and reaching communication with these devices allowing the registration of addresses of each transmitter that is linked, in order to establish individual communication in each particular case. The firmware will also allow the device to identify the address of each transmitter at the time of receiving simultaneous signals and will transmit the electroshock to the user as corresponded. The power source 211 should have a voltage between 3 and 4 V, however, if changing this specification became necessary, because of the components requirement, this will affect the whole concept, which is simply to provide the system with the energy necessary for the operation of the device. Said source could be a disposable battery, a rechargeable battery, a photoelectric cell or any other device that provides energy needed for the device's operation. The circuit requires a ground connection 212.

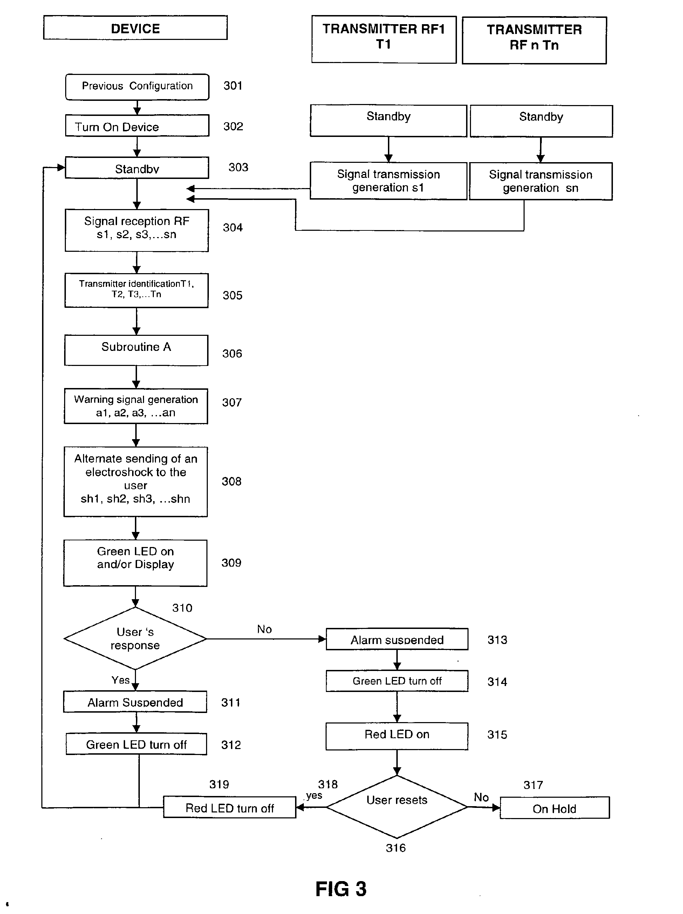

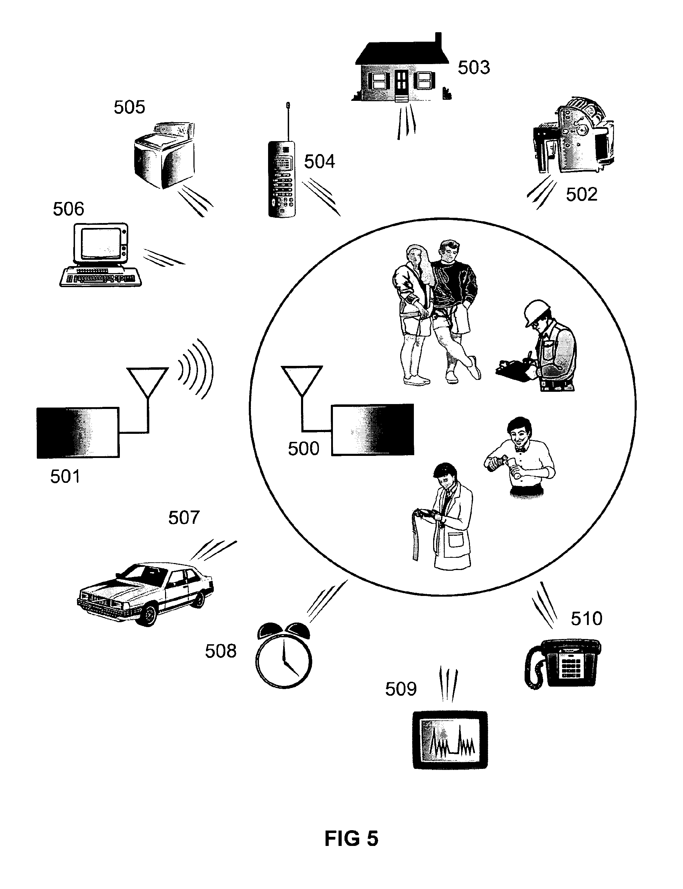

FiG 3. Is a diagram of one way to operate the device, when all the components, elementary and accessories are present. The device has to be previously configurated or linked so it can start its operation 301 with the equipment that would have communication with, enabling its operation. Once linked or configurated the device should be turned on 302, being at stand by mode 303, waiting to detect the presence of any radio frequency signal transmitted by any linked device or equipment. The device at this moment is able to identify the signals emitted by any linked transmitters which will be identify as T1, T2, T3...... Tn. When the device receives the signal from any of the linked transmitters, S1, S2, S3..... Sn 304, will identify its source 305. Depending on the firmware installed, the device will execute the subroutine A 306, sending differentiated signals to the user in a simultaneous and warning way corresponding to each of the transmitters generating a internal warning signals to the system 307. At this time, an electroshock is sent to the user 308 (Sh1, Sh2, Sh3.... Shn) which will have different characteristics according to each linked transmitter. the electroshocks will vary in length and frequency. Whit these two variables the user could identify the source of each signal received. If any type of device should required the substitution of the warning system, any silent warning system could be used. As soon as the alarm signal is activated a LED would light 309, preferably green, to visually indicate and incoming signal appearing in a display when present, showing a number or signal identifying the source of the signal, although this visual signing are not indispensable for the device functioning, the user will have two alternatives: taking care or not taking care of the warning or signal 310, If the user takes care of the warning, the alarm message will be suspended 311 and the LED will be turned off 312 going to a stand by mode 303. In an opposite case, if the user does not take care of the message, the system will suspend sending the signal, by suspending the reception of the radio frequency signal 313, the LED will be turned off 314 and other LED will be lighted Preferably red 315 indicating that a signal was received and was not taken care of. The user will again have two choices: resetting or not the device 316. If the resetting is not done the device will be on a hold mode with the red LED on 317., if the device is reset 318, the red LED will be turned off 319 and the system goes back to stand by mode 303. This operation could be repeated as many times as simultaneous incoming signals (S1, S2, S3... Sn) are received by the device, coming from any of the transmitters (T1, T2, T3..... Tn) which are linked to the device. When simultaneous signals are received, the device will send the warning signals to its user on a alternating and simultaneous form. FIG. 5 Shows apparatus, objects and devices which could be linked to the radio frequency signal that are received by the device, also shows the different kind of users that the device can be used by. Inside the circle, in fig 500, the device motive of this invention is presented, receiving a radio frequency signal in a generic form also showing in its surroundings the profile of some possible users, like a doctor, a waiter, ordinary people, a machine operator among many, emphasizing its wide field of use. Illustration 501 represent in a generic form a transmitter equipment that could be among others and industrial machine 502, a door bell 503, a cell phone or any other mobile device 504, a washing machine o any other appliance 505, a computer or informatics accessory 506, a vehicle 507, a clock alarm 508, a medical equipment 509, e.g an electro cardiographer; a house phone 510.

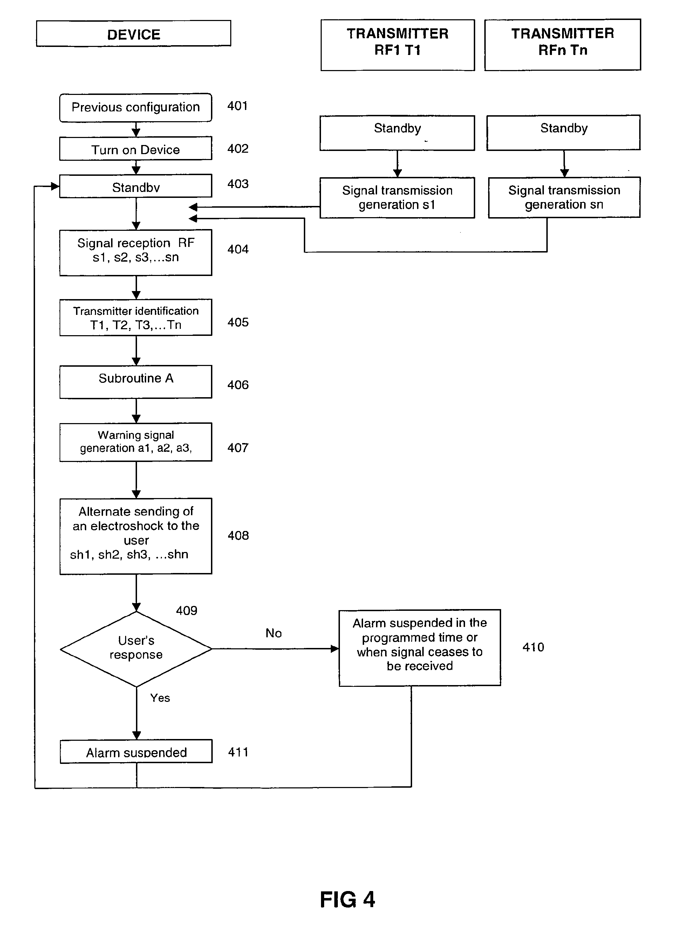

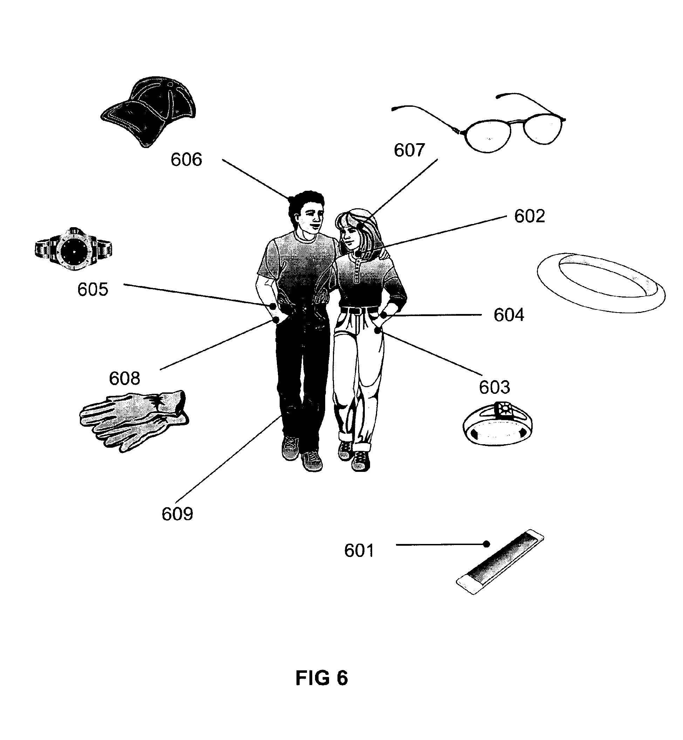

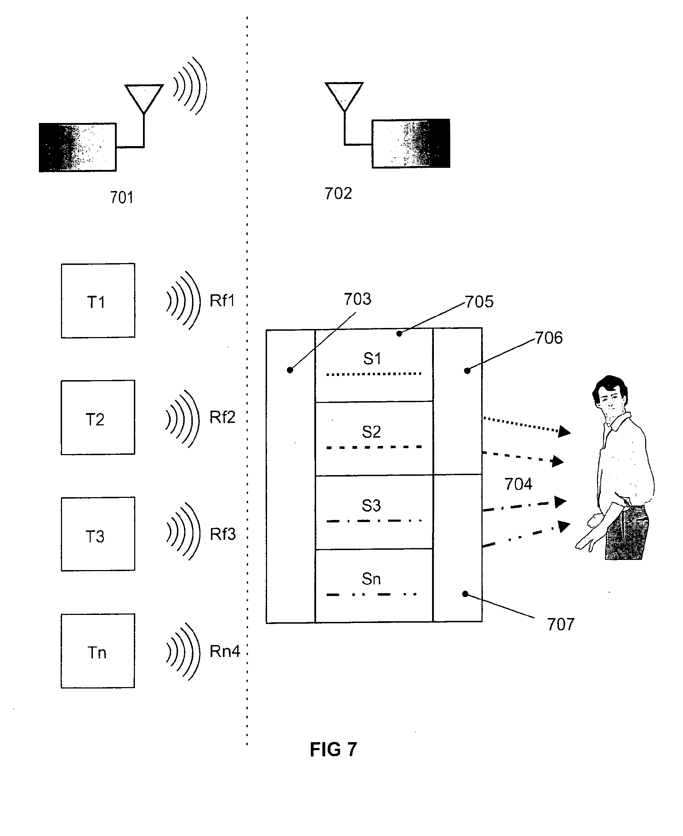

FiG. 6 Corresponds to several models where the device could be built in, the device object of this invention could be built in to any applications as long as the object where the device is to built in is in touch to the user's body. The first modality is were the device is encapsulated 601, which could be through any adhesive that allows the device to be attached to any object that allows to be in touch with the body of the user. Other application is that the device be built in or attached to some kind of necklace or pendant 602, Other application is integrating the device to a ring 603, the device could also be attached to a bracelet 604, other use of the device is by attaching it to a watch or any sport wrist band 605, also the device could be integrated to a hat, a cap, a head band or visor 606, one more use is to integrate the device into a pair or safety goggles or glasses 607, one more modality is the use of the device integrated in a pair of gloves or any other wearing garment gear 608, the device also could be integrated on an elastic band that could be place on the leg or tight of the user 609. FIG 7. Diagram of communication path between the transmitters T1, T2, T3.... Tn, and the device reason of this present invention and the emission of warning signals to the user. Any kind of transmitter 701, would generate a radio frequency signal Rf1, Rf2, Rf3,.....Rfn, that once is received by the device 702, through the radio frequency module 703, will deliver a warning of advice to the user 704, emitted by the electroshocks generator 706, the user could get the advises or warnings on different forms depending of the modality of the device, according to some models described in FIG. 4.
Its conditions is that it must receive a silent warning or advice, which will be transmitted through electroshocks and will have distinctive and specific characteristics to be identified which each transmitter, the variety of the signals will be defined by the length of the electroshock and its emission frequency 705, such characteristics will be generated by the own device. The lines and dots represent the presence of an electroshock which could be short, represented by a dot, moderated represented by a short line, or long which is represented by a long line, the distance between dots and lines represents the time gone by between the emission of signals, With this representation the different kind of signals or warnings can be seen an can be associated with the different transmitters linked to the device. If required at any particular case, the advice or warning could be different, substituting the electroshock emitter by any other object that allows the delivery of silent warnings or advices to the user, via touch of feeling, In some modality a small display will be included 707, this will allow to identify the signal's source, by showing in the screen a number or figure which would be assigned to each linked transmitter.

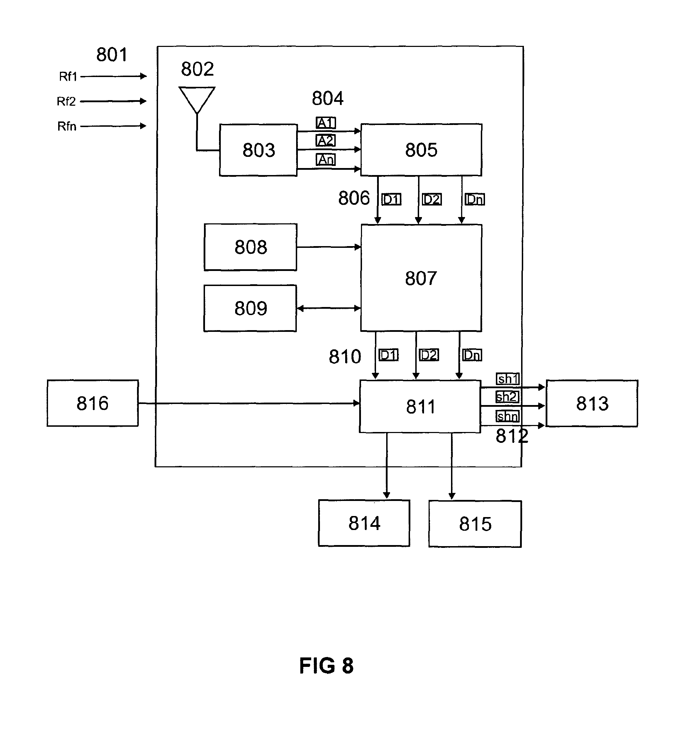

FIG. 8 Shows a block diagram of the device where the reception of radiofrequency signals are detailed, and how are received bay the user. Several radio frequency signals 801, Rf1,Rf2,Rf3, Rfn...., are simultaneously received through a antenna 802, and transmitted to a radiofrequency reception module 803, which would be built base on the wireless technology chosen and would work the same way as the protocol established for this. The Analog signals 804, A1, A2, ...An, will arrive to a transductor 805, where there will be converted to digital signals 806, D1, D2, Dn... which will go through the CPU 807, where they will be identified and processed by the a routine established by the firmware content in the ROM 808, getting the source id of the signals, a differential code will be assigned to each signal that will allow the user to receive differentiated electroshock signals, corresponding with each identified transmitter. the temporary information that is sent and received by the transmission devices external and remote which establish the sending and receiving of radio frequencies during the communication process will be stored in the memory RAM 809. The digital signals 810 will pass through a controller 811, that makes the electroshock generator works 813, making this to produce electroshocks on a differentiated way based on the frequency combination established by the firmware that is described in FiG. 7 e.g sh1, sh2, ...shn. The same controller will be able to activate LEDs 814. Or a display 815, when presentented in the model according to its defined function. The device will have a switch 816, which will work as a on and off button as well as a reset button.

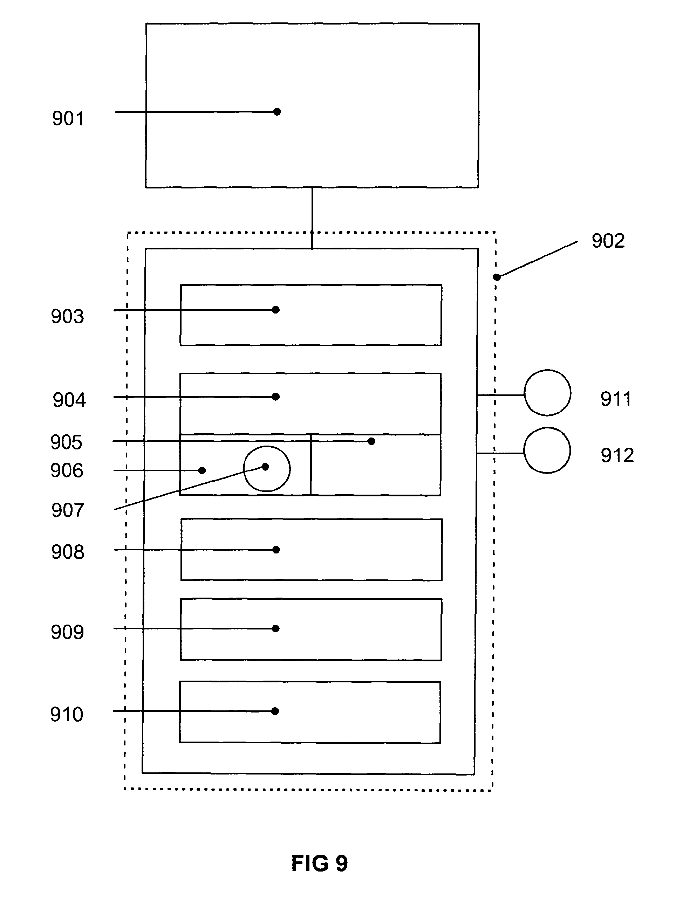

FIG. 9 Arquitecture of the radio frequency emission device and its connection to the apparatus, machine or equipment from which the wished to be transmitted signal is obtained. In the figure the machine, object or source equipment is shown 901, from which the signal will be transmitted to the present invention, This object will be connected to a radio frequency transmitter device 902, the function of this device is to find and identify radio frequency transmission devices, also will configurate, link and establish connectivity with the devise of the present invention, in order to operate the system which will be constituted by a connectivity interface 903. This will allow the conversion of analog-digital signals coming form a source, an information processing unit made up by a CPU 904, A memory RAM 905, a memory ROM 906, where the firmware will be installed 907 which execute the logical routines of the system, a controller 908, a transductor 909, and radio frequency module 910, which will receive and transmit the wireless signals between devices. In addition to the baseband logic The transmitter device will also have two external elements , made by a display 911, and a keyboard or buttons 912, which will allow the user to communicate physically with the device.

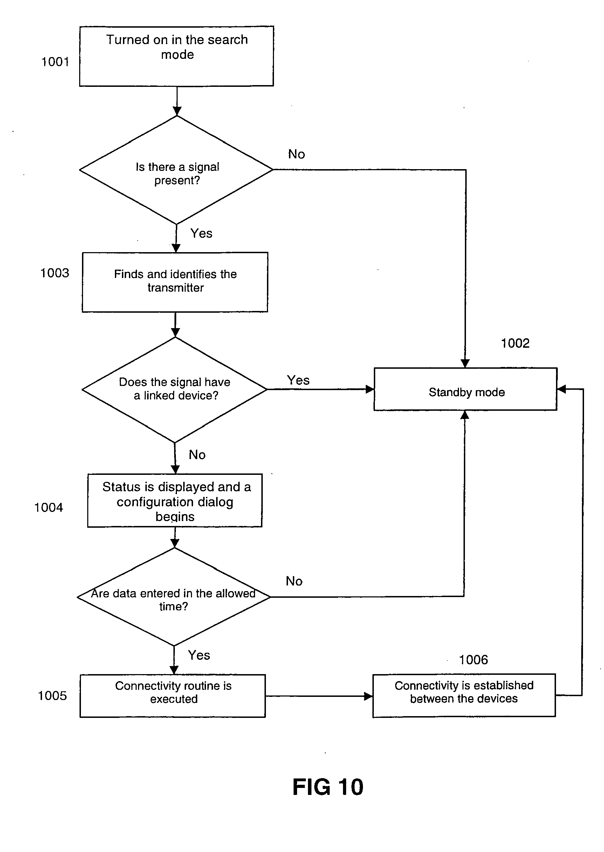

FIG 10. Diagram to describe the methodology to establish the connectivity between devices. To assure operation and functioning of the device it is required the association and connectivity of the device with other apparatus, devices or objects of transmission and reception of radio frequency. Two components are required for the functioning of the device these are defined in FIG. 1 and 2, the transmitter must have a radio frequency signal communications system compatible with the device, this system could be a manufactured feature or it could be an external device that can be connected to the alarm signal that wished to be transmitted. Now days there is a great number of devices which have transmission systems through radio frequency signals. In order to implement communications with devices which already have a transmission system, the same protocol and technology should be selected in order to built the device reason of this invention in order to achieve compatibly among devices, concrete samples of devices which already have radio frequency communications are the devices which have integrated Bluetooth technology that is also compatible with Wibree, in this case what proceeds is the configuration to such connectivity in order to have communication with the device with out the need of doing any modification. In case the apparatus, device, machine or object referred as the transmitter does not have a radio frequency communication system a device with the elements and descriptions described at FIG 8, will need to be adapted to this transmitter. The functioning methodology system between the devices (transmitter- receiver) will be as previously established in FIG. 3 and 4 and to establish connectivity between the transmitters and the device the following method will be followed: The transmitter will be turned on 1001, at the same time the radio frequency interface will be connected, which according to the firware programming it will go into a radio frequency search mode, If the apparatus, machine or object doesn't find a radio frequency signal it will go to stand by mode 1002. If a radio frequency is found, and address will be identified 1003, it will verify this address and it will register it in its memory. If this address already registered it will go stand by mode. If the received signal does not match with any one registered, it status will be shown in the screen 1004, in order to proceed with connectivity. The user will have the possibility to feed with information to the system as long as its done within the time limit allowed by the system otherwise it will go to stand by mode. If the user follows the connectivity routine 1005 the communication between the devices will be established in the system 1006. Which will go to stand by mode being in the possibility to execute the function for which this system was designed for, to alert or give advices of radio frequencies coming from associated transmitters simultaneously and silently to its user.

### PREFFERED MODALITY OF THE INVENTION

The first modality of the invention is to be applied with the mobile telephony, it operates in such way that allows a cell phone, an electronic agenda or any mobile device to work as a main transmitter, in such way that when this transmitter emits a radio frequency signal the device will receive it and actives the emission of harmless electroshocks to the user, alerting the user of an incoming advice or alert. The alert system could be replaced by a piezoelectric device or a small offset mass motor when convenient. The signal could be from a home call, an appoiment reminder or any other programmed activitie in the agenda, it could be a any alarm advice, the incoming message on a cell phone, a alarm clock or any other signal emitted by a cell phone or any mobile device. The device will also have the characteristic of additionally receive radio frequency signals sent by several transmitters including cell phones and other mobile objects simultaneously . In this modality the communication is done through wireless technology called Bluetooth and/ or Wibree, due to the fact the a vast number of cellular devices use the first mentioned technology the second one will be also well positioned soon. Although in the case the device would like to be implemented in combination with some apparatus with different wireless technology all it has to be done is replace the receptor of the radio frequency according to the used technology. The device will be placed on different plataforms, it could be mounted on a finger ring, or a bracelet it could well be designed to be adapted according to the expectations of the market having with this the possibility to have several models, styles and prices according to the different market segments to which the marketing strategy is targeted to. This is an important aspect because the design of the product could be combined with the different models of cell phones and mobile equipment all ready in the market, in order to be part of them. It is also important to take into account the profile of the user to whom the design in targeted to because this device could well be used by a home maker, a teenager or an executive. The Wibree technology allows a wide range of uses due to the fact that the Wibree modules are small and its energy consumption is low and its price is affordable and it is compatible with the Bluetooth technology. This device could also be mounted on the watch belt, a necklace or bracelet, a hat o cap and also could be mounted on a visor. This device will be built in such way that will be able to receive many signals from several transmitters on a simultaneously or independently. Other modality in which this invention will be presented is the one used as a reception unit of radio frequency technology called Wibree. With the use of this technology in this modality this inventions could be designed in smaller platforms such as rings, earrings, or con be built in a watch or be mounted on a pair of glasses without altering its original design. A third modality were this invention could be applied is in the industrial plants, its purpose is to receive alarm signals from machines or different equipment; in this case the device could be mounted or built in on a bracelet or it could be bigger with a stronger warning signal that could well be worn in the ankle, the leg, arm, safety hat or cap. The preferred wireless technology will be Bluetooth, although any other could be chosen depending the case. The most elemental modality will be a device that sends electroshocks from different sources to its user in order to identify its origins and could have or not LEDs, but does not have any displays.
Although some mainly modalities of application are described this description are only informational and not limited due to the fact that this invention have a vast universe of applications. In the future any technology related to the wireless communication will be able to be applied to the present invention, because the main purpose of this invention is to provide silent warnings emitted by remote transmitters to the device, allowing the use of any wireless technology.

Having described enough my invention, I considered it as a novelty therefore I claim it as of my exclusive property, the contents of the following clauses.

## Claims

1. Multiple alert electronic device which delivers silent warning to its user when receiving radio frequency signals coming from one or several remote transmitters, **characterized** for been made up by a Central Processing Unit (CPU), formed by a microprocessor; a permanent memory, a read only memory (ROM); a temporary memory, Random Access memory (RAM); a controller, a transductor, an antenna, and electroshocks emitter device, a switch with reset, and on/off fuctions, a display, A LED V (green), A LED R (red), a power source, and ground connection, the display and LEDs could be omitted in the manufacturing of the device when the modality calls for it.

2. Multiple silent alert electronic device as mentioned in the above clause, also **characterized by** having a Central Processing unit (CPU) made up by a microprocessor, which function is to execute the logical operations establish by the firmware characteristic of the device. This unit is connected to the inputs and outputs of the device, and controls the device for the reception of radio frequency signals and the production of signals that are sent to the user and manages the multiple signal entrance coming from remote transmitters, identifying its source, assigning a particular characteristic to each one.

3. Multiple silent alert electronic device as mentioned in clause 1, also **characterized by** having a Read Only Memory (ROM) where the firmware in charge of the control and operation of the device is stored.

4. Multiple silent alert electronic device as mentioned in clause 1, also **characterized by** having a temporary memory, Random Access Memory (RAM) in charge of temporary storage of the sent and receive information during the communication process between the remote transmission-reception devices. This unit also works during the process of establishing connectivity with other devices.

5. Multiple silent alert electronic device as mentioned in clause 1, also **characterized by** having a controller, which works as an interface between the CPU and the external electronic components to the baseband logic.

6. Multiple silent alert electronic device as mentioned in clause 1, also **characterized by** having a transductor which works as a connectivity interface for the analog-digital, digital - analog conversions in the communication with the radio frequency module that forms the device.

7. Multiple silent alert electronic device as mentioned in clause 1, also **characterized by** having a radio frequency module which works as a transmitter and receptor of the radio frequency signals and transmits the signals to the CPU. The signals are received from fixed or mobile objects or apparatus and the reception is multiple and simultaneous.

8. Multiple silent alert electronic device as mentioned in clause 1, also **characterized by** having an antenna, for the reception and transmission of radio frequency signals.

9. Multiple silent alert electronic device as mentioned in clause 1, also **characterized by** having an electroshock emitter device, which emits low intensity electroshocks to alert the user of an incoming radio frequency signal, which could be of different intensity and be emitted in short intervals with variable frequency and time length. In some modalities, it could be substituted by any artifact that sends contact silent signals to the user e.g a vibrator.

10. Multiple silent alert electronic device as mentioned in clause 1, also **characterized by** having a switch with on/off and reset functions, which allows the user to turn on and off the device and reset it when needed.

11. Multiple silent alert electronic device as mentioned in clause 1, also **characterized by** having a firmware installed in the ROM, which will allow the CPU to execute the logical routines, localization and identification of the radio frequency signals transmitters, the communication and functioning of all the components to achieve the multiple signal reception, its identification and advice or warning to the user in an effective way. Also will have the routines that allow the configuration or link connectivity with other devices.

12. Multiple silent alert electronic device as mentioned in clause 1, also **characterized by** having a display which shows the source of the signal received. This display could be omitted in the modalities when its functioning does not require.

13. Multiple silent alert electronic device as mentioned in clause 1, also **characterized by** having a LED V (green) and a LED R (red) or a bipolar LED, to indicate the presences of radio frequency signals. This component are not strictly required or necessary to achieve the device's functions , therefore they will be included only in the modalities that call for it.

14. Multiple silent alert electronic device as mentioned in clause 1, also **characterized by** having a power source that should have a voltage between 3 to 4 V; the voltage could be different according to the requirements of the components that make up the device and could be a disposable battery, a rechargeable battery, photo electric cell or any other device that supplies the energy required for the device's operation.

15. Multiple silent alert electronic device as mentioned in clause 1 and 7 , **characterized** because the radio frequency signals transmitter-receiver component, is a component that receives radio frequency signals in the band 2.0 to 2.4 GHz mainly, and could be extended to 2.5 Ghz.

16. Multiple silent alert electronic device as mentioned in clause 1,7 and 15 **characterized** because the communication system designed for the transmission-receiving of the signal could be WiFi, Zigbee, IrDA, UWB, Bluetooth, Wibree, Infrared or any other existent or in the future invented wireless communication system that could be operated for the short distance radio frequency transmission.

17. Multiple silent alert electronic device as mentioned in clause 1,7 and 15 **characterized** because in modalities related to cell telephony, machine connectivity, electronic equipment and apparatus that contain Bluetooth connectivity system, this invention will have a component with Bluetooth technology allowing the connectivity.

18. Multiple silent alert electronic device as mentioned in clause 1,7 and 15 **characterized** because the component radio frequency signal receiver will use a wireless communication technology that is compatible with the signal transmitter devices or apparatus either fixed or mobile could well been technology such as WiFi, Zigbee,IrDA, UWB, Bluetooth, Wibree, among others.

19. Multiple silent alert electronic device as mentioned in clause 1,7,15,16,17 and 18 **characterized** because the radio frequency signals sent by the linked transmitters will be received by the device simultaneously and sent to the its user indicating the source of them, when the modality calls for it.

20. Multiple silent alert electronic device as mentioned in clause 1, **characterized** because the component which generates the physical warning that the user receives is an electroshock emitter, emitting low intensity electroshocks which are felt by the user but are harmless and do not pose any risk, it can be substituted if needed by other object that allows the user to receive silent signals.

21. Multiple silent alert electronic device as mentioned in clause 1, **characterized** because by having the components which integrate the device, assembled or encapsulated. The device could be mounted accordingly to each application and its use. It could also be built-in in any other accessory, such as rings, watches, bracelets, caps, visors or glasses, or any other article that allows to be in contact with the body.

22. Multiple silent alert electronic device as mentioned in clause 1, 7, 16, 17, 18, 19 and 21 **characterized by** its connectivity to fixed or mobile apparatus and its capacity to receive advices or warnings simultaneously, characteristics that allow its application in different fields, industrial, home, sports, hospitals, public and private safety and in any other field where a silent wireless warning is required.

23. The application of the multiple silent alert electronic device according to clauses 1, 7, 16, 17, 18, 19, 21 and 22 **characterized by** its connectivity with fixed or mobile apparatus on a wireless basis and for its capacity to receive multiple warnings simultaneously, also the transmission of silent warnings through radio frequencies coming from apparatus located within a short distance of the user.

24. The uses of the multiple silent alert electronic device according to clauses 1, 7, 16, 17, 18, 19, 21, 22 and 23 **characterized by** its connectivity with fixed or mobile apparatus and its capacity to receive warning advices simultaneously will be only informational and not limited to the following: as an instrument to advice about several warning calls and phone calls, it could be use in recreational activities or it could be used as a mechanism of warnings in general. It will be used to alert the user of signals sent by the emitters linked to the device.

25. The modalities of the multiple silent alert electronic device according to clauses 1, 7, 16, 17, 18, 19, 21, 22, 23 and 24 **characterized by** the uses referred in clause 24 and the application used in clause 23, besides its characteristics of receiving signals coming from fixed and mobile apparatus simultaneously, it also will be in function of a device encapsulated, assembled or integrated to an article such as a watch, a ring, a bracelet, a pendant, a necklace, a cap, a hat, a pair of safety glasses, gloves or any other garment that allows the device to be in contact with the body.

26. The modalities of the multiple silent alert electronic device according to cla A LED V (green), A LED R (red),uses 1,2, 3, 4, 5, 6, 7, 8, 9, 10, 11, 12, 13, 14 **characterized by** its connectivity with equipment and fixed or mobile devices as a multiple alert innovating characteristics of the present invention. The components described in clause 1 could be combined, in function of each particular application but in every case the modalities must contain the following components: Central Processing Unit (CPU), formed by a microprocessor; a permanent memory, a read only memory (ROM); a temporary memory, Random Access memory (RAM); a controller, a transductor, an antenna, and electroshocks emitter device, a switch with reset, and on/off functions and a integrated firmware that as a whole make up the present invention all of this is been feed by a power source and a circuit connected to ground, the electro shocks emitter con be replaced by any other device that transmit the user any silent signal, but there should always be a device that transmit the user a silent signal, in addition to all these basic elements and in function of any modality also the following could be installed: A LED V (green), A LED R (red), or a bipolar LED that could also be of any other color, a display, any combination of the components could be used as long as the purpose of this invention is achieved.

27. The use or the application of the multiple silent alert electronic device according to clauses 1,17,21,22,23,24,25 and 26 is **characterized by** its functionality in fixed and mobile equipment, this could be industrial machines, cell phones, electronic agendas or fax machines, RF blocks, computer terminals, software, microcode, Audio Gateway (AG), electronic circuits, alarm clocks, any warning signal or any apparatus that requires to receive a wireless short distance signal.

28. Method to give warning of a received radio frequency signal by users who have the device which is wore in contact with the body, which transmits a silent warning, **characterized** because the radio frequency signals that receive could be coming form one or many remote transmitters that can be machines or fixed or mobile apparatus , the signals could be received simultaneously and the user would have the ability to identify its source.

29. Method according to clause 28, **characterized** be the specific technique that are made by the following steps:
a) Reception of the radio frequency signals by device, which are emitted by the signal transmitters linked with the device.
b) The process of the information generated by the reception of multiple signals, coming from the different transmitters simultaneously to be properly order and be able to deliver silent signals and identifiable signals to the user.
c) The emission of silent signals that should be sent in order to the user, so he has the possibility to identify its source.

30. Method according to clauses 28 and 29 **characterized** because the communication of radio frequency signals between the signal's transmitters linked to the device and the own device is a signal been transmitted by an apparatus that has a device which allows the transmission of radio frequencies.

31. Method according to clauses 28,29, and 30 **characterized by** establishing the requirements that have to be meet by the transmitter and the way it should be configurated in case it doesn't have the transmission elements required.

32. Method according to clauses 28,29,30,31 and 32 **characterized by** defining the procedure to configurate or link the communication between associated devices to establish its connectivity.

33. Method according to clauses 28,29,30,31 y 32 where the operation of the communication system is established, **characterized by** indicating the sequence of operation from the moment when the signal is received until the user gets the silent alert, indicating how the user can get in a simultaneously form several signals sent by different linked transmitters and has the possibility to identify its source of each one.
